# EUROPÄISCHE PATENTSCHRIFT

(11) **EP 3 966 645 B1**
(45) Veröffentlichungstag und Bekanntmachung des Hinweises auf die Patenterteilung: **17.06.2026**
(21) Anmeldenummer: 20723851.0
(22) Anmeldetag: 04.05.2020
(51) Int. Cl.: G05B 23/02, B05B 12/00, B05C 5/02

(54) **ÜBERWACHUNGSVERFAHREN FÜR EINE APPLIKATIONSANLAGE UND ENTSPRECHENDE APPLIKATIONSANLAGE**
MONITORING METHOD FOR AN APPLICATION PLANT AND CORRESPONDING APPLICATION PLANT
PROCÉDÉ DE SURVEILLANCE POUR UNE INSTALLATION D'APPLICATION ET INSTALLATION D'APPLICATION CORRESPONDANTE

(30) Priorität: 09.05.2019 DE 102019112099
(43) Veröffentlichungstag der Anmeldung: 16.03.2022
(73) Patentinhaber: Dürr Systems AG, 74321 Bietigheim-Bissingen (DE)
(72) Erfinder: WINTER, Tobias, 74321 Bietigheim-Bissingen (DE); THOMÄ, Paul, 71691 Freiberg am Neckar (DE)
(74) Vertreter: v. Bezold & Partner Patentanwälte - PartG mbB
(86) Internationale Anmeldenummer: PCT/EP2020/062242
(87) Internationale Veröffentlichungsnummer: WO 2020/225175

(56) Entgegenhaltungen:
- EP-A1- 0 753 170
- WO-A2-2015/185211
- DE-A1- 102007 062 132
- US-A1- 2004 236 472
- US-A1- 2017 043 359
- US-A1- 2019 099 886
- US-B1- 6 609 036

## Beschreibung

Die Erfindung betrifft ein Überwachungsverfahren für eine Applikationsanlage zur Applikation eines Auftragsmittels, nämlich für eine Lackieranlage zur Lackierung von Kraftfahrzeugkarosseriebauteilen. Weiterhin umfasst die Erfindung eine entsprechend ausgestaltete Lackieranlage.

In modernen Lackieranlagen zur Lackierung von Kraftfahrzeugkarosseriebauteilen wird der Betrieb durch Steuersignale gesteuert, wobei zahlreiche Sensoren jeweils Betriebsgrößen der Lackieranlage erfassen und Sensorrohdaten erzeugen, so dass der Betriebszustand der Lackieranlage durch eine Auswertung der Sensorrohdaten und der Steuersignale überwacht werden kann. Die bisherigen Überwachungsverfahren zur Überwachung des Betriebs von Lackieranlagen sind jedoch noch nicht vollständig befriedigend.

In DE 10 2007 062 132 A1 ist ein Überwachungsverfahren für eine Applikationsanlage zur Applikation eines Auftragsmittels, insbesondere für eine Lackieranlage zur Lackierung von Kraftfahrzeugkarosseriebauteilen, offenbart. Dabei werden Sensorrohdaten ermittelt und Steuersignale erfasst und zur Funktionsüberprüfung herangezogen.

Aus DE 10 2018 214 170 A1 ist ein Verfahren und eine Vorrichtung zur Durchführung einer Qualitätsbeurteilung einer technischen Anlage bekannt, wobei Sensorrohdaten ("Bilddaten") und Steuersignale ("Beobachtungsbedingungsdaten") als Datenbasis für einen Maschinelles-Lernen-Algorithmus dienen.

Die Druckschrift DE 10 2016 217 948 A1 beschreibt ein Verfahren zur Prognose der Qualität von Klebeverbindungen, wobei die Klebeverbindung durch eine Klebstoffverarbeitungseinrichtung, die u.a. eine Applikationsvorrichtung zum Applizieren von Klebstoff aufweist, aufgebracht wird. Die Analyse der Messdaten erfolgt durch einen Vergleich mit einem Datenmodell. Das statistische Datenmodell, das mittels einer multivariaten Analysemethode erstellt worden ist, kann dabei durch maschinelles Lernen optimiert werden.

Zum technischen Hintergrund der Erfindung ist auch hinzuweisen auf WO 2015/185211 A2, US 6 609 036 B1 und US 2017/043359 A1.

Ferner offenbart US 2019/0099886 A1 ein Überwachungsverfahren für Roboter zur Herstellung von Halbleiter-Wafern.

Schließlich offenbaren EP 0 753 170 A1 und US 2004/236472 A1 jeweils ein Überwachungsverfahren gemäß dem Oberbegriff von Anspruch 1. Diese bekannten Überwachungsverfahren sind jedoch nicht befriedigend.

Der Erfindung liegt deshalb die Aufgabe zugrunde, ein verbessertes Überwachungsverfahren und eine entsprechende Applikationsanlage zu schaffen.

Diese Aufgabe wird durch ein erfindungsgemäßes Überwachungsverfahren bzw. durch eine entsprechende Applikationsanlage gemäß den unabhängigen Ansprüchen gelöst.

Die Erfindung beruht auf der technischen Erkenntnis, dass zur Überwachung einer Applikationsanlage (z.B. Lackieranlage) vorteilhaft Machine-Learning-Verfahren eingesetzt werden können, wie sie beispielsweise aus Fayyad U.; Patetsky-Shapiro, G.; Smyth, P.: "From Data Mining to Knowledge Discovery in Databases", Al Magazine, Vol. 17, No. 3 (1996) bekannt sind. Eine weitere Literaturquelle für Machine-Learning-Verfahren ist Bremer, M.: "Principles of Data Mining", Springer-verlag (2009).

Das erfindungsgemäße Überwachungsverfahren sieht zunächst in Übereinstimmung mit den bekannten Überwachungsverfahren vor, dass erste Sensorrohdaten ermittelt werden, die eine Betriebsgröße der Applikationsanlage wiedergeben. Beispielsweise können die ersten Sensorrohdaten als Betriebsgröße den Lenkluftdruck von Lenkluft wiedergeben, die zur Formung eines Sprühstrahls eines Rotationszerstäubers eingesetzt wird. Die ersten Sensorrohdaten können jedoch auch andere Betriebsgrößen der Applikationsanlage wiedergeben, wie nachfolgend noch detailliert erläutert wird.

Weiterhin sieht auch das erfindungsgemäße Überwachungsverfahren in Übereinstimmung mit den bekannten Überwachungsverfahren vor, dass erste Steuersignale zur Ansteuerung der Applikationsanlage erfasst werden. Beispielsweise können die ersten Steuersignale den Soll-Wert des Lenkluftstroms definieren, der zur Formung eines Sprühstrahls eines Rotationszerstäubers eingesetzt wird. Die ersten Steuersignale können jedoch auch zur Einstellung anderer Betriebsgrößen der Applikationsanlage dienen, wie nachfolgend noch detailliert erläutert wird.

Die Steuersignale bilden also zusammen mit den Sensorrohdaten Signalsets, die im Rahmen der Erfindung ausgewertet werden. Beispielsweise kann ein Signalset als Steuersignal den Soll-Wert des Lenkluftstroms und als Sensorrohdaten das Ist-Signal des Lenkluftdrucks berücksichtigen. Ein Signalset kann jedoch auch mehr als ein Ist-Signal und mehr als ein Steuersignal umfassen. Allgemein kann ein Signalset 1...m verschiedene Steuersignale und 1...k verschiedene Ist-Signalen umfassen, wobei die Signale auch zu verschiedenen Regelkreisen gehören können.

Das erfindungsgemäße Überwachungsverfahren zeichnet sich gegenüber dem Stand der Technik dadurch aus, dass sogenannte Features aus den ersten Sensorrohdaten extrahiert werden, wobei die Features gegenüber den ersten Sensorrohdaten eine reduzierte Datenmenge umfassen und als Datenbasis für einen Maschinelles-Lernen-Algorithmus dienen.

Der im Rahmen der Erfindung verwendete Begriff "Features" hat zunächst die Bedeutung, dass die Datenmenge durch die Feature-Extraktion reduziert wird, d.h. die extrahierten Features haben im Vergleich zu den Sensorrohdaten eine geringere Datenmenge.

Darüber hinaus hat der im Rahmen der Erfindung verwendete Begriff von "Features" die Bedeutung, dass die Features vom genauen Betriebsablauf abstrahieren, ohne dass dabei für die Zustandserkennung relevante Informationen verloren gehen. Beispielsweise ist es nicht mehr erforderlich, nur exakt gleiche Abläufe von gleichen Werkstückvarianten (z.B. Karossenvarianten) zu vergleichen. Vielmehr ist es beispielsweise ausreichend, wenn in ganz verschiedenen Karossen ähnliche "Brushes" miteinander verglichen werden.

Weiterhin hat der im Rahmen der Erfindung verwendete Begriff "Features" die Bedeutung, dass sich die Features als Datenbasis für Maschinelles-Lernen-Algorithmen eignen, wobei die an sich bekannten Maschinelles-Lernen-Algorithmen auf den extrahierten Features aufsetzen. Die Features bilden damit eine Brücke zwischen den Sensorrohdaten einerseits und den Maschinelles-Lernen-Algorithmen, was häufig erst eine stabile und mit begrenzten Ressourcen beherrschbare Datenauswertung durch Maschinelles-Lernen-Algorithmen ermöglicht.

In einem bevorzugten Ausführungsbeispiel der Erfindung werden erste und zweite Sensorrohdaten ermittelt, die unterschiedliche Betriebsgrößen der Applikationsanlage widerspiegeln, wobei sowohl aus den ersten Sensorrohdaten als auch aus den zweiten Sensorrohdaten Features extrahiert werden, die dann als Datenbasis für einen Maschinelles-Lernen-Algorithmus dienen können. Beispielsweise können die ersten Sensorrohdaten als Betriebsgröße den Lenkluftstrom wiedergeben, während die zweiten Sensorrohdaten die Drehzahl einer Antriebsturbine eines Rotationszerstäubers repräsentieren. Die ersten und zweiten Sensorrohdaten können jedoch auch andere Betriebsgrößen der Applikationsanlage wiedergeben, wie nachfolgend noch ausführlich beschrieben wird.

Die Extraktion der Features aus den ersten bzw. zweiten Sensorrohdaten erfolgt wie folgt.

In einem Schritt wird zunächst ein Betrachtungszeitfenster festgelegt, innerhalb dessen die ersten bzw. zweiten Sensorrohdaten ausgewertet werden sollen. Beispielsweise kann es sich bei dem Betrachtungszeitfenster um einen Karossentakt handeln, d.h. den Zeitraum zwischen dem Einfördern einer zu lackierenden Kraftfahrzeugkarosserie in eine Lackierkabine und dem Einfördern der nächsten Kraftfahrzeugkarosserie in die Lackierkabine. Dies hat den Vorteil, dass Zustände und Überwachungen während des normalen Produktionsablaufs möglich sind. Hinsichtlich des Betrachtungszeitfensters bestehen jedoch im Rahmen der Erfindung verschiedene Möglichkeiten, die nachfolgend noch detailliert beschrieben werden.

In einem weiteren Schritt wird dann das Betrachtungszeitfenster in einzelne Abschnitte, sogenannte Vergleichszeiträume unterteilt. So können die Vergleichszeiträume durch Änderungen (Sprünge) von Steuersignalen definiert werden. Beispielsweise wird bei jeder Änderung eines für den Anwendungsfall relevanten Steuersignals innerhalb eines Karossentakts ein neuer Vergleichszeitraum gestartet. Beispielsweise kann hierzu der Sollwert des Lenkluftstroms eines Rotationszerstäubers ausgewertet werden. Im Rahmen der Erfindung können jedoch auch verschiedene andere Steuersignale ausgewertet werden, um den Vergleichszeitraum festzulegen, wie noch ausführlich beschrieben wird.

In einem weiteren Schritt wird dann der Vergleichszeitraum selbst in mehrere aufeinander folgende Teilabschnitte unterteilt, wobei die Unterteilung durch Parameter vorgegeben wird.

Beispielsweise kann der Vergleichszeitraum in 0...n anfängliche Regulierphasen, 0...m anschließende regulierte Phasen und 0...1 anschließende Restphase als Teilabschnitte unterteilt werden.

Die Regulierphasen befinden sich in der anfängliche Zeitphase innerhalb des Vergleichszeitraums, in dem die ersten bzw. zweiten Sensorrohdaten auf den Sprung des ersten bzw. zweiten Steuersignals reagieren, so dass man noch nicht vom eingesprungenen Zustand sprechen kann.

Die regulierten Phasen befinden sich im Zeitraum nach der Regulierphase, in dem die ersten bzw. zweiten Sensorrohdaten mindestens teilweise auf einen Steuersignalsprung reagiert haben.

Zur Vermeidung von Missverständnissen ist darauf hinzuweisen, dass das Verfahren selbst nicht prüft, ob die Sensorrohdaten in den Regulierphasen bzw. in den regulierten Phasen eingeschwungen sind oder nicht. Vielmehr wird die Unterteilung in Regulierphasen und regulierte Phasen durch Parameter fest vorgegeben, d.h. durch die vorgegebene Zeitdauer der Regulierphase und die ebenfalls vorgegebene Zeitdauer der regulierten Phase.

Die Restphase ist dagegen der restliche Zeitabschnitt nach den Regulierphasen und den regulierten Phasen bis zum Ende des Vergleichszeitraums. Hierbei besteht die Möglichkeit, dass der Vergleichszeitraum eine einzige oder gar keine Restphase enthält. Wenn beispielsweise die Summe aus den Regulierphasen und den regulierten Phasen exakt gleich der Zeitdauer des Vergleichszeitraums ist, so enthält der Vergleichszeitraum keine Restphase.

Hierbei ist zu erwähnen, dass die regulierte Phase und die Restphase optional sind für den Fall, dass der Vergleichszeitraum hinreichend lang ist, um zusätzlich zu der oder den Regulierphasen auch noch die regulierten Phasen und die Restphase aufzunehmen. Bei einem relativ kurzen Vergleichszeitraum kann es jedoch vorkommen, dass der Vergleichszeitraum nur in eine Regulierphase und eine Restphase unterteilt wird. Bei einem sehr kurzen Vergleichszeitraum besteht sogar die Möglichkeit, dass der Vergleichszeitraum nur eine einzige Regulierphase und überhaupt keine regulierte Phase enthält.

In einem weiteren Schritt wird dann für die einzelnen Teilabschnitte mindestens eine statistische Kenngröße für die ersten und/oder zweiten Sensorrohdaten und gegebenenfalls für weitere Sensorrohdaten innerhalb der einzelnen Teilabschnitte berechnet, wobei die berechnete statistische Kenngröße dann ein Bestandteil der extrahierten Features ist.

Es wurde bereits vorstehend kurz erwähnt, dass der Vergleichszeitraum durch Sprünge bzw. Änderungen von Steuersignalen begrenzt sein kann, d.h. eine Änderung eines Steuersignals startet einen Vergleichszeitraum und die nächste Änderung eines Steuersignals beendet den aktuellen Vergleichszeitraum und startet den nächsten Vergleichszeitraum.

In einer Variante der Erfindung wird der Vergleichszeitraum hierbei durch Änderungen (Sprünge) desselben Steuersignals begrenzt. Hierbei wird also bei der Festlegung des Vergleichszeitraums nur ein einziges Steuersignal ausgewertet, z.B. der Sollwert für den Lenkluftstrom eines Rotationszerstäubers. Die möglichen Sprünge anderer Steuersignale werden dagegen bei dieser Erfindungsvariante nicht für die Festlegung des Vergleichszeitraums herangezogen.

In einer anderen Erfindungsvariante werden dagegen mehrere Steuersignale zur Festlegung des Vergleichszeitraums herangezogen. Auch hierbei wird der Vergleichszeitraum von Änderungen bzw. Sprüngen der Steuersignale begrenzt. Allerdings werden hierbei verschiedene Typen von Steuersignalen ausgewertet. Beispielsweise kann ein Sprung des einen Steuersignals den Beginn des Vergleichszeitraums markieren, während ein Sprung des anderen Steuersignals das Ende des aktuellen Vergleichszeitraums und den Start des nächsten Vergleichszeitraums markiert.

Es wurde bereits vorstehend kurz erwähnt, dass die in den einzelnen Teilabschnitten des Vergleichszeitraums ermittelte statistische Kenngröße ein Bestandteil der extrahierten Features ist. Es besteht jedoch im Rahmen der Erfindung auch die Möglichkeit, dass die extrahierten Features weitere Informationen enthalten. So können die Features beispielsweise die Höhe von Sollwertänderungen der Steuersignale und den Zeitraum seit der letzten Änderung umfassen, um nur einige Beispiele zu nennen.

Ferner wurde bereits vorstehend erwähnt, dass der Vergleichszeitraum in Teilabschnitte unterteilt wird, nämlich beispielsweise 0...n Regulierphasen, 0...m regulierte Phasen und 0...1 Restphase. An dieser Stelle wird nochmals darauf hingewiesen, dass der Vergleichszeitraum nicht notwendigerweise mehrere Regulierphasen und mehrere regulierte Phasen enthalten muss. Beispielsweise besteht auch die Möglichkeit, dass der Vergleichszeitraum nur eine einzige Regulierphase enthält. Die Anzahl der Teilabschnitte und die Zeitdauer der Teilabschnitte kann hierbei in Abhängigkeit von der Zeitkonstanten der Sensorrohdaten festgelegt werden. Hierzu wird die Zeitkonstante der ersten und/oder zweiten Sensorrohdaten ermittelt und die Anzahl der Teilabschnitte in dem Vergleichszeitraum, die Zeitdauer der einzelnen Regulierphase und/oder die Zeitdauer der einzelnen regulierten Phase werden dann in Abhängigkeit von der ermittelten Zeitkonstante festgelegt. Pro Anwendungsfall, der auch mehrere Steuer und Sensordaten enthalten kann, wird nur eine einzige Zeitkonstante ausgewählt.

Es ist jedoch alternativ auch möglich, dass die Zeitdauer der einzelnen Regulierphasen und/oder der einzelnen regulierten Phasen zufällig festgelegt wird.

Es wurde bereits vorstehend erwähnt, dass es sich bei dem Betrachtungszeitfenster beispielsweise um einen Karossentakt handeln kann. Hierbei handelt es sich um einen bauteilbezogenen Zeitraum, der auf das zu beschichtende Bauteil bezogen ist, nämlich konkret auf das zu lackierende Kraftfahrzeugkarosseriebauteil. Bei dem Betrachtungszeitfenster kann es sich jedoch als alternativ auch um einen anderen bauteilbezogenen Zeitraum handeln, wie beispielsweise den Zeitraum, der zur Vorbereitung der Applikationsanlage für die anschließende Beschichtung eines zu beschichtenden Bauteils erforderlich ist.

Weiterhin besteht im Rahmen der Erfindung die Möglichkeit, dass es sich bei dem Betrachtungszeitfenster um einen applikationsanlagenbezogenen Zeitraum handelt, wie beispielsweise die Zeitdauer eines Einrichtbetriebs, eines Testbetriebs, eines Handbetriebs oder eines Wartungsbetriebs.

Ferner besteht auch die Möglichkeit, dass es sich bei dem Betrachtungszeitfenster um einen zeitbezogenen Zeitraum handelt, wie beispielsweise eine Stunde, einen Tag, eine Woche, einen Monat, ein Quartal oder ein Jahr. Ein anderes Beispiel für einen zeitbezogenen Zeitraum als Betrachtungszeitfenster ist die Schichtlänge einer Arbeitsschicht.

Es wurde bereits vorstehend erwähnt, dass in den einzelnen Teilabschnitten eine statistische Kenngröße ermittelt wird, die dann ein Bestandteil der extrahierten Features ist.

In einer Variante der Erfindung handelt es sich bei dieser statistischen Kenngröße um eine univariate Kenngröße, die nur einen Typ von Sensorrohdaten berücksichtigt. Beispiele für eine solche univariate statistische Kenngröße sind der arithmetische oder geometrische Mittelwert, der Medianwert, die Varianz, der Maximalwert oder der Minimalwert innerhalb eines Teilabschnitts, wobei die univariate statistische Kenngröße immer auf dieselben Sensorrohdaten bezogen ist, d.h. auf eine einzige Betriebsgröße.

In einer anderen Variante der Erfindung handelt es sich bei der statistischen Kenngröße dagegen um eine multivariate statistische Kenngröße, die aus verschiedenen Sensorrohdaten berechnet wird. Beispiele für solche multivariate statistische Kenngrößen sind der Pearson-Korrelationskoeffizient und der Rang-Korrelationskoeffizient. Es besteht jedoch auch die Möglichkeit, dass die multivariate statistische Kenngröße drei oder mehr verschiedene Sensorrohdaten eines Signalsets berücksichtigt.

Gemäß der Erfindung repräsentieren die Sensorrohdaten eine der folgenden Betriebsgrößen der Applikationsanlage:
- Drehzahl einer Turbine eines Rotationszerstäubers,
- Luftdruck von Antriebsluft zum Antrieb einer Turbine eines Rotationszerstäubers,
- Beschichtungsmitteldruck an einem Farbdruckregler,
- Ladestrom einer elektrostatischen Beschichtungsmittelaufladung,
- Ladespannung einer elektrostatischen Beschichtungsmittelaufladung,
- Luftfeuchtigkeit in einer Beschichtungskabine,
- Luftdruck von Lenkluft zur Formung eines Sprühstrahls des Beschichtungsmittels,
- Mengenstrom von Lenkluft zur Formung eines Sprühstrahls des Beschichtungsmittels,
- Lufttemperatur in einer Beschichtungskabine,
- Position eines Farbauftreffpunkts eines Applikationsgeräts,
- Bewegungsgeschwindigkeit eines Farbauftreffpunkts eines Applikationsgeräts,
- Ventilstellung eines Ventils, insbesondere eines Beschichtungsmittelventils, eines Spülmittelventils, eines Pulsluftventils oder eines Schmiermittelventils,
- Antriebsgröße eines Antriebs, insbesondere eines Roboterantriebs, insbesondere von Position, Geschwindigkeit, Beschleunigung, Strom, Spannung, Leistung oder Temperatur,
- Förderstrom einer Beschichtungsmittelpumpe oder eines Dosierers.

Beispielhaft können auch folgende Sensorrohdaten herangezogen werden:
- Position eines Linearförderers, der die zu beschichtenden Bauteile durch die Applikationsanlage fördert,
- Mengenstrom, Temperatur und Druck von Material,
- Drehzahl eines Swirl-Applikators.

Es wurde bereits vorstehend erwähnt, dass im Rahmen des erfindungsgemäßen Überwachungsverfahrens verschiedene Sensorrohdaten ausgewertet werden können. Bei dieser Überwachung verschiedener Sensorrohdaten ist eine beliebige Kombination der vorstehend genannten Beispiele von Sensorrohdaten möglich. Beispielsweise kann die Drehzahl einer Turbine des Rotationszerstäubers zusammen mit dem Förderstrom des Beschichtungsmittels ausgewertet werden, um nur ein Beispiel zu nennen. Darüber hinaus ist es im Rahmen der Erfindung auch möglich, dass mehr als zwei verschiedene Typen von Sensorrohdaten ausgewertet werden, wobei beliebige Kombinationen der vorstehend genannten Beispiele von Sensorrohdaten möglich sind.

Beispielsweise können die Sensorrohdaten eine Betriebsgröße einer der folgenden Komponenten der Applikationsanlage wiedergeben:
- Motor,
- Robotergelenk eines Beschichtungsroboters,
- Antriebsregler eines Roboterantriebs eines Beschichtungsroboters,
- Turbine zum Antrieb eines Rotationszerstäubers,
- Lenkluftregler zum Regeln eines Lenkluftstroms durch Formung eines Sprühstrahls eines Zerstäubers,
- Pumpe, insbesondere Beschichtungsmittelpumpe,
- Dosierer zum Dosieren des Beschichtungsmittels,
- Ventil, insbesondere Proportionalventil,
- Farbdruckregler,
- Hochspannungserzeuger zur elektrostatischen Beschichtungsmittelaufnahme,
- Schalter,
- Sensor,
- Heizung,
- Steuerung,
- elektrische Sicherung,
- elektrische Batterie,
- unterbrechungsfreie Stromversorgung,
- unterbrechungsfreie Signalübertragung,
- Transformator,
- Fluidleitungen, insbesondere Schläuche oder Rohre, für den Transport von Fluiden, insbesondere von Beschichtungsmittel, Dickstoff, Klebstoff, Verdünner, Luft oder Wasser,
- Swirl-Applikator.

Hinsichtlich der Bereitstellung der Sensorrohdaten bestehen im Rahmen der Erfindung verschiedene Möglichkeiten. Beispielsweise können die Sensorrohdaten laufend gemessen und dann ausgewertet werden. Alternativ können die Sensorrohdaten aus einer Datenbank ausgelesen werden, sofern die Sensorrohdaten zeitversetzt früher gemessen wurden.

Es wurde bereits vorstehend erwähnt, dass die aus den Sensorrohdaten extrahierten Features als Datenbasis für Maschinelles-Lernen-Algorithmen dienen. Diese Maschinelles-Lernen-Algorithmen verwenden üblicherweise sogenannte Regeln, die auf die Features angewendet werden und einen Rückschluss auf den Betriebszustand der Anlage ermöglichen. Zur Erstellung dieser Regel können historische Sensorrohdaten herangezogen werden, die früher gemessen und gespeichert wurden, wobei sogenannte Labels den Betriebszustand (z.B. fehlerfrei oder fehlerhaft) der Applikationsanlage während der Messung der historischen Sensorrohdaten wiedergeben. Aus den historischen Sensorrohdaten werden dann in der vorstehend beschriebenen Weise die Features extrahiert. Anschließend werden dann mittels eines Maschinelles-Lernen-Algorithmus Regeln ermittelt und zwar aus den Features, die aus den historischen Sensorrohdaten extrahiert wurden einerseits und aus den bekannten Labels andererseits. Die auf diese Weise ermittelten Regeln können dann später auf Features angewendet werden, die aus aktuell gemessenen Sensorrohdaten extrahiert wurden.

Die Auswertung der Features, die aus den aktuell gemessenen Sensorrohdaten extrahiert wurden, kann beispielsweise dazu dienen, den Betriebszustand der Applikationsanlage zu erkennen. Beispielsweise ist es möglich, einen der folgenden Zustände zu erkennen:
- Verschleiß oder Defekt eines Farbdruckreglers,
- Verschleiß oder Defekt eines Mischers, der mehrere Komponenten eines Beschichtungsmittels miteinander mischt,
- Verschleiß oder Defekt einer Pumpe, insbesondere einer Beschichtungsmittelpumpe,
- Verschleiß oder Defekt eines Ventils, insbesondere eines Ventils zur Steuerung von Lack, Dickstoff, Klebstoff, Verdünner, Luft oder Wasser,
- Verschleiß oder Defekt einer Heizung,
- Verschleiß oder Defekt eines Antriebsmotors,
- elektrische Kontaktierungsfehler,
- Erkennung von Lufteinschlüssen im Lack bzw. Aussetzer der Lackversorgung,
- Eigenschaften eines Betriebsmediums der Applikationsanlage, insbesondere von Luft, Wasser, Lack, Klebstoff oder Dickstoff,
- Bewertung des Applikations- und Bewegungsprogramms auf Beanspruchung der Maschinenkomponenten bzw. Geräte,
- Erkennung eines Abwurfs eines Glockentellers eines Rotationszerstäubers,
- Erkennung von Verschmutzung und/oder Feuchtigkeit an einem Zerstäuber,
- Erkennung von Abweichungen im Betriebsverhalten von Motoren, Pumpen, Kolben, Lenklüften, Turbinen, Hochspannung, Druckflussreglern,
- Allgemeine Erkennung von Anomalien im Sinne einer signifikanten Abweichung des Signalverlaufs vom Normalverlauf,
- Prognose von Wartungsintervallen.

Weiterhin ist zu erwähnen, dass der im Rahmen der Erfindung verwendete Begriff einer Applikationsanlage auf Lackieranlagen zur Lackierung von Kraftfahrzeugkarosseriebauteilen beschränkt ist.

Darüber hinaus ist zu erwähnen, dass die Erfindung nicht nur Schutz beansprucht für das vorstehend beschriebene erfindungsgemäße Überwachungsverfahren. Vielmehr beansprucht die Erfindung auch Schutz für eine entsprechende Lackieranlage mit einem Applikator (z.B. Rotationszerstäuber), einem Manipulator (z.B. mehrachsiger Lackierroboter), einem Sensor zur Messung von Sensorrohdaten und einer Steuereinrichtung, welche die Applikationsanlage steuert. Die erfindungsgemäße Lackieranlage zeichnet sich dadurch aus, dass die Steuereinrichtung das vorstehend beschriebene erfindungsgemäße Überwachungsverfahren ausführt.

Hierbei ist zu erwähnen, dass die Steuereinrichtung in diesem Sinne auf mehrere Hardware-Komponenten verteilt sein kann. Es ist auch zu erwähnen, dass es sich nicht um die Applikationsanlagensteuerung handeln muss. Die Überwachung kann auf einer ganz anderen Hardware laufen, die gar nichts mit der Applikationsanlagensteuerung zu tun hat.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung des erfindungsgemäßen Systemaufbaus zur Überwachung einer Applikationsanlage,
- Figur 2: eine schematische Darstellung des Aufbaus der Analyse-Software,
- Figur 3: eine schematische Darstellung der Betriebsweise der Analyse-Software zur Feature-Extraktion,
- Figur 4: ein Flussdiagramm zur Verdeutlichung des erfindungsgemäßen Überwachungsverfahrens,
- Figur 5: ein Zeitdiagramm zur Verdeutlichung der Feature-Extraktion,
- Figur 6: ein Flussdiagramm zur Verdeutlichung des erfindungsgemäßen Überwachungsverfahrens, sowie
- Figur 7: ein Zeitdiagramm zur Verdeutlichung der Feature-Extraktion unter Berücksichtigung von mehreren Steuersignalen und mehreren Sensorrohdaten.

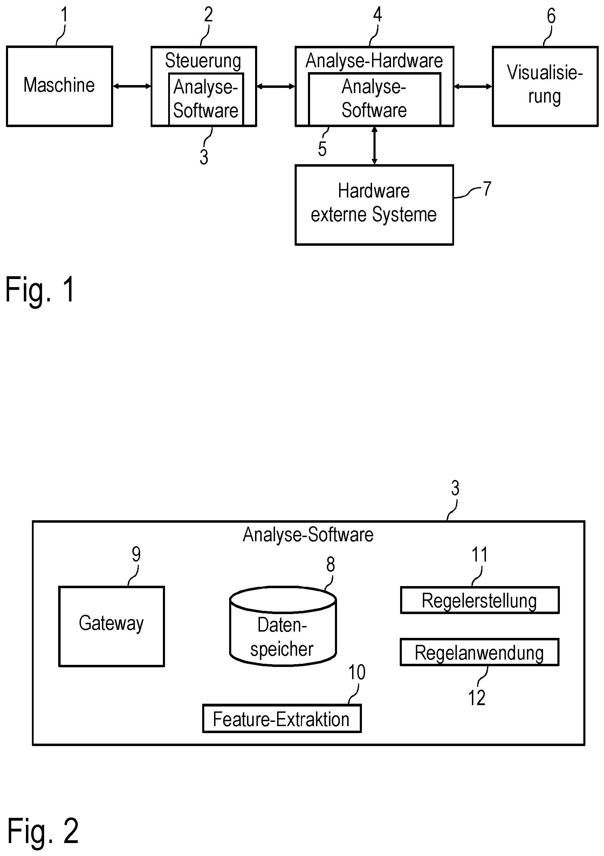

Figur 1 zeigt den Systemaufbau eines erfindungsgemäßen Systems mit einer Maschine 1, einer Steuerung 2 mit einer eingebetteten Analyse-Software 3, einer Analyse-Hardware 4 mit einer Analyse-Software 5, einer Visualisierung 6 und einer Hardware 7, die zu externen Systemen gehört.

Bei der Maschine 1 handelt es sich in diesem Ausführungsbeispiel um eine Lackieranlage zur Lackierung von Kraftfahrzeugkarosseriebauteilen mit allen ihren Komponenten.

Die Steuerung 2 gibt hierbei Steuersignale an die Maschine 1 ab und empfängt mit Sensorrohdaten von der Maschine 1, wobei die Sensorrohdaten von der Analyse-Software 3 ausgewertet werden können.

Darüber hinaus können die Sensorrohdaten auch von der Analyse-Software 5 der Analyse-Hardware 4 ausgewertet werden.

Figur 2 zeigt eine schematische Darstellung des modularen Aufbaus der Analyse-Software 3 bzw. 5.

So hat die Analyse-Software 3 Zugriff auf einen Datenspeicher 8 und auf eine Gateway 9 zur Kommunikation mit den anderen Komponenten, wie beispielsweise der Maschine 1 oder der Hardware 7.

Weiterhin umfasst die Analyse-Software 3 ein Modul 10 zur Feature-Extraktion, ein Modul 11 zur Regelerstellung und ein Modul 12 zur Regelanwendung.

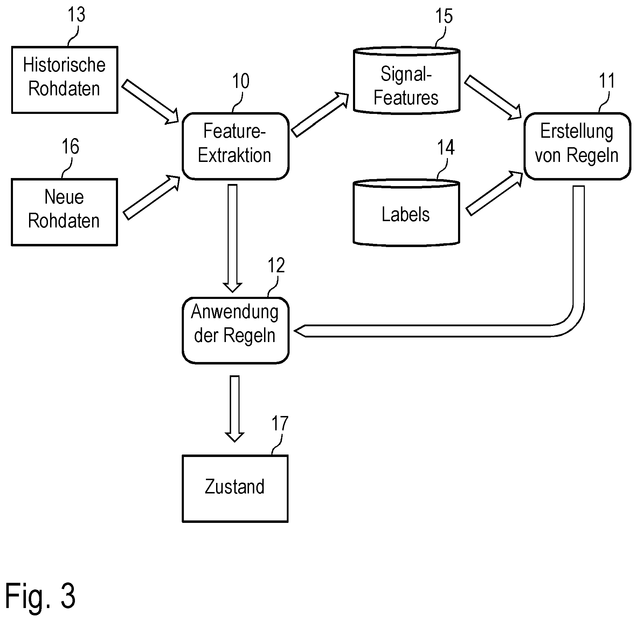

Figur 3 zeigt eine schematische Darstellung zur Verdeutlichung des erfindungsgemäßen Überwachungsverfahrens.

Zunächst extrahiert das Modul 10 zur Feature-Extraktion Features aus historischen Rohdaten 13, die zuvor bei einem bekannten Betriebszustand der Maschine 1 gemessen wurden, wobei der bekannte Betriebszustand der Maschine 1 durch Labels 14 wiedergegeben werden. Das Modul 10 zur Feature-Extraktion extrahiert dann aus den historischen Sensorrohdaten 13 Features 15, wie noch detailliert beschrieben wird. Die Feature-Extraktion durch das Modul 10 hat die Aufgabe, den Datenumfang der historischen Sensorrohdaten 13 zu reduzieren, damit anschließend ein Maschinelles-Lernen-Algorithmus auf den Features 15 aufsetzen kann.

Das Modul 11 erstellt dann aus den extrahierten Features 15 und den bekannten Labels 14 Regeln, die dann zur späteren Auswertung von aktuell gemessenen Rohdaten 16 dienen.

Im normalen Betriebsablauf extrahiert das Modul 10 dann aus den aktuell gemessenen neuen Sensorrohdaten 16 wieder Features und das Modul 12 wendet die zuvor bestimmten Regeln auf die extrahierten Features an, um einen Zustand 17 der Maschine 1 zu ermitteln.

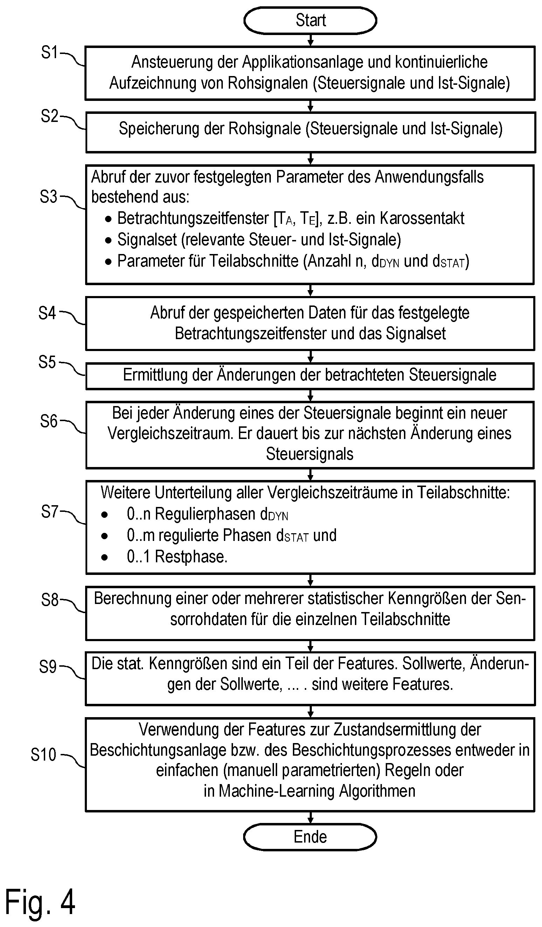

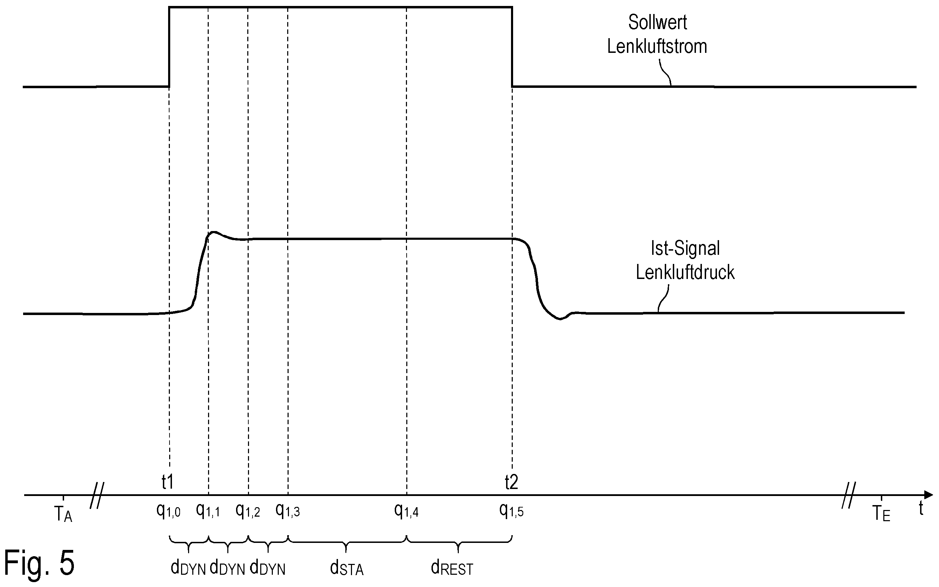

Im Folgenden wird nun das Flussdiagramm gemäß Figur 4 beschrieben, wobei auf das Zeitdiagramm gemäß Figur 5 Bezug genommen wird.

In einem erstem Schritt S1 erfolgt eine Ansteuerung der Applikationsanlage, wobei Rohsignale aufgezeichnet werden, d.h. zum einen Steuersignale zur Ansteuerung der Applikationsanlage und zum anderen Ist-Signale (Sensorrohdaten), die von Sensoren gemessen werden und Betriebsgrößen der Applikationsanlage wiedergeben.

Die Rohsignale (Steuersignale und Ist-Signale) werden dann in einem Schritt S2 gespeichert.

In einem Schritt S3 werden dann zuvor festgelegte Parameter des jeweiligen Anwendungsfalles abgerufen. Zum einen zählt dazu das Betrachtungszeitfenster [T_{A}, T_{E}], wobei es sich beispielsweise um einen Karossentakt handeln kann. Zum anderen definieren die abgerufenen Parameter auch die Auswahl des gewünschten Signalsets, d.h. die Steuersignale und die Ist-Signale, die ausgewertet werden sollen. Schließlich umfassen die abgerufenen Parameter auch Parameter für die Unterteilung der Vergleichszeiträume [t1, t2] in Teilabschnitte, wie beispielsweise die Anzahl n der der Regulierphasen d_{DYN}, die Dauer der Regulierphasen d_{DYN} und die Dauer der regulierten Phasen d_{STAT}. Es gibt so viele statische regulierte Phasen d_{STAT} wie in den Vergleichszeitraum nach Abzug der Regulierphasen d_{DYN} noch passen.

In einem Schritt S4 werden dann die zuvor gespeicherten Daten der Rohsignale (Steuersignale und Ist-Signale) abgerufen und zwar konkret für das Betrachtungszeitfenster [T_{A}, T_{E}] und für das Signalset, die im Schritt S3 ermittelt wurden.

In einem Schritt S5 werden dann Änderungen der betrachteten Steuersignale ermittelt, wobei diese Änderungen in dem Zeitdiagramm gemäß Figur 5 zu den Zeitpunkten t1 und t2 auftreten.

Anschließend erfolgt dann in einem Schritt S6 die Festlegung mindestens eines Vergleichszeitraums [t1, t2], der bei der Änderung des Steuersignals zum Zeitpunkt t1 beginnt und bei der nächsten Änderung des Steuersignals zum Zeitpunkt t2 endet. In der Regel werden mehrere Vergleichszeiträume betrachtet.

In einem Schritt S7 wird dieser Vergleichszeitraum [t1, t2] dann in Teilabschnitte unterteilt und zwar in Abhängigkeit von den Parametern, die im Schritt S3 abgerufen wurden. In Abhängigkeit von der Zeitdauer des Vergleichszeitraum [t1, t2], der Zeitdauer der Regulierphase d_{DYN} und der Zeitdauer der regulierten Phase d_{STAT} wird der Vergleichszeitraum [t1, t2] dann in 0...n Regulierphasen d_{DYN}, 0...m regulierte Phase d_{STAT} und 0...1 Restphase unterteilt. In dem Zeitdiagramm gemäß Figur 5 setzt sich der Vergleichszeitraum [t1, t2] aus drei Regulierphasen d_{DYN} und zwei regulierten Phasen d_{STAT} zusammen. Hierbei handelt es sich jedoch nur um ein Beispiel, d.h. der Vergleichszeitraum [t1, t2] kann auch anders aus Teilabschnitten zusammengesetzt sein.

In dem Schritt S8 wird dann für die einzelnen Teilabschnitte jeweils eine univariate statistische Kenngröße der Sensorrohdaten ermittelt, d.h. der Ist-Signale, die von den Sensoren gemessen wurden und eine Betriebsgröße der Applikationsanlage wiedergeben. Das Zeitdiagramm gemäß Figur 5 zeigt konkret, dass als Ist-Signal der Lenkluftstrom eines Rotationszerstäubers gemessen wird. In Abhängigkeit von dem im Schritt S3 abgerufenen Signalset können jedoch auch andere Ist-Signale zur Berechnung der statistischen Kenngröße herangezogen werden. Beispielsweise kann es sich bei dieser univariaten statistischen Kenngröße um einen arithmetischen Mittelwert handeln, um nur ein Beispiel zu nennen.

In dem Schritt S9 werden dann die Features ermittelt, wobei die in dem Schritt S8 berechneten univariaten statistischen Kenngrößen ein Bestandteil dieser Features sind. Andere Bestandteile der Features sind Sollwerte und Änderungen der Sollwerte.

In dem Schritt S10 werden die Features dann verwendet, um den Zustand der Applikationsanlage zu ermitteln, was entweder in einfachen (manuell parametrierten) Regeln oder in Machine-Learning-Algorithmen erfolgen kann.

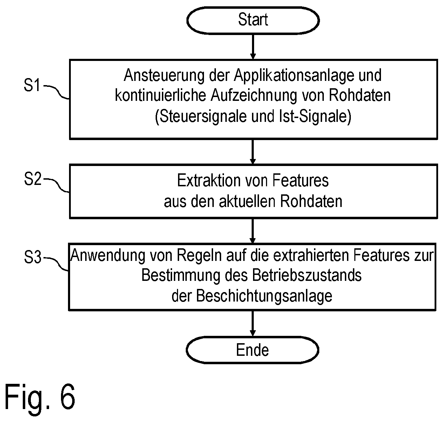

Figur 6 zeigt ein Flussdiagramm, das zusätzlich zu der Messung der Sensorrohdaten in dem Schritt S1 und der Extraktion von Features in dem Schritt S2 auch die Anwendung von Regeln auf die extrahierten Features in dem Schritt S3 zeigt.

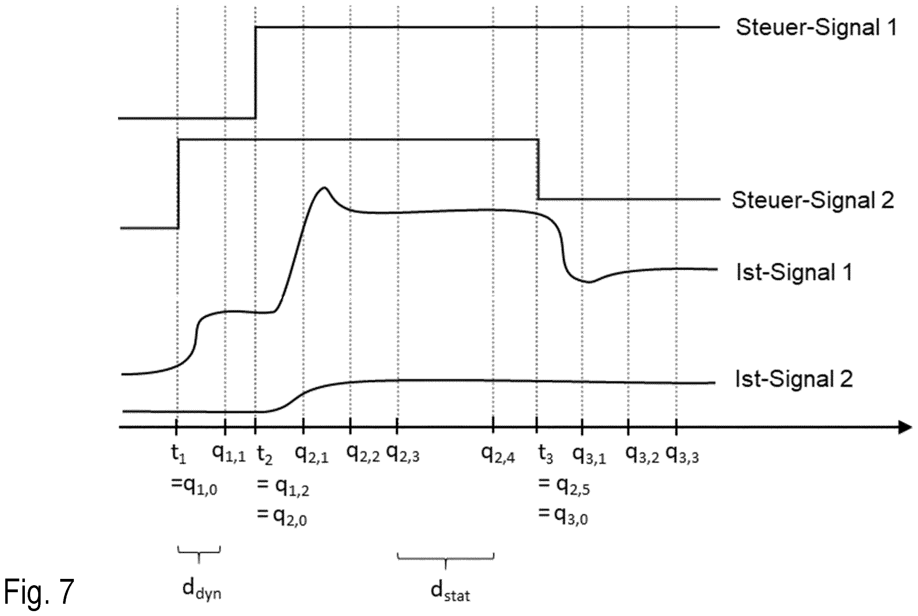

Figur 7 zeigt eine Abwandlung des Zeitdiagramms gemäß Figur 5, wobei zwei Steuer-Signale und zwei Ist-Signale dargestellt sind. Der Vergleichszeitraum ist hierbei begrenzt durch die Sprünge der beiden Steuer-Signale.

Ein erster Vergleichszeitraum liegt also zwischen den Zeitpunkten t₁ und t₂. Ein zweiter Vergleichszeitraum liegt zwischen den Zeitpunkten t₂ und t₃.

Die vorstehend genannten Vergleichszeiträume können dann wieder in der vorstehend beschriebenen Weise in Teilabschnitte unterteilt werden.

Darüber hinaus werden für die einzelnen Teilabschnitte auch wieder statistische Kenngrößen berechnet, wobei es sich jedoch auch um multivariate Kenngrößen handeln kann, die beispielsweise aus den beiden Ist-Signalen berechnet werden. Ein Beispiel für eine solche multivariate statistische Kenngröße ist der Pearson-Korrelationskoeffizient.

### Bezugszeichenliste:

- 1: Maschine
- 2: Steuerung
- 3: Analyse-Software
- 4: Analyse-Hardware
- 5: Analyse-Software
- 6: Visualisierung
- 7: Hardware
- 8: Datenspeicher
- 9: Gateway
- 10: Modul zur Feature-Extraktion
- 11: Modul zur Regelerstellung
- 12: Modul zur Regelanwendung
- 13: Historische Rohdaten
- 14: Labels
- 15: Features
- 16: Neue Rohdaten
- 17: Zustand der Maschine
- d_{DYN}: Regulierphase
- d_{STAT}: Regulierte Phase
- [T_{A}, T_{E}]: Betrachtungszeitfenster
- [t₁, t₂]: Vergleichszeitraum

## Patentansprüche

1. Überwachungsverfahren für eine Applikationsanlage (1) zur Applikation eines Auftragsmittels, nämlich für eine Lackieranlage zur Lackierung von Kraftfahrzeugkarosseriebauteilen, mit den folgenden Schritten:
a) Ermittlung von ersten Sensorrohdaten (16), die eine Betriebsgröße der Applikationsanlage (1) wiedergeben, wobei die ersten Sensorrohdaten (16) eine der folgenden Betriebsgrößen der Applikationsanlage (1) wiedergeben:
a1) Drehzahl einer Turbine eines Rotationszerstäubers,
a2) Luftdruck von Antriebsluft zum Antrieb einer Turbine eines Rotationszerstäubers,
a3) Beschichtungsmitteldruck an einem Farbdruckregler,
a4) Ladestrom einer elektrostatischen Beschichtungsmittelaufladung,
a5) Ladespannung einer elektrostatischen Beschichtungsmittelaufladung,
a6) Luftfeuchtigkeit in einer Beschichtungskabine,
a7) Luftdruck von Lenkluft zur Formung eines Sprühstrahls des Beschichtungsmittels,
a8) Mengenstrom von Lenkluft zur Formung eines Sprühstrahls des Beschichtungsmittels,
a9) Lufttemperatur in einer Beschichtungskabine,
a10) Position eines Farbauftreffpunkts eines Applikationsgeräts,
a11) Bewegungsgeschwindigkeit eines Farbauftreffpunkts eines Applikationsgeräts,
a12) Förderstrom einer Beschichtungsmittelpumpe oder eines Dosierers, und
b) Erfassung von ersten Steuersignalen zur Ansteuerung der Applikationsanlage (1), umfassend die folgenden Schritte:
c) Extraktion von Features (15) aus den ersten Sensorrohdaten (16), wobei die Features (15) gegenüber den ersten Sensorrohdaten (16) eine reduzierte Datenmenge umfassen und als Datenbasis für einen Maschinelles-Lernen-Algorithmus dienen, wobei die Extraktion der Features folgende Schritte umfasst:
c1) Festlegung eines Betrachtungszeitfensters ([T_{A}, T_{E}]) zur Auswertung der ersten Sensorrohdaten (16),
c2) Festlegen mindestens eines Vergleichszeitraums ([t₁, t₂]) innerhalb des Betrachtungszeitfensters ([T_{A}, T_{E}]),
c3) Unterteilung des Vergleichszeitraums ([t₁, t₂]) in mehrere aufeinander folgende Teilabschnitte (d_{DYN}, d_{STAT}, d_{REST}), und
c4) Berechnung mindestens einer statistischen Kenngröße für die ersten Sensorrohdaten (16) und oder weitere Sensorrohdaten innerhalb der einzelnen Teilabschnitte (d_{DYN}, d_{STAT}, d_{REST}), wobei die statistische Kenngröße ein Bestandteil der Features (15) ist.

2. Überwachungsverfahren nach Anspruch 1, **gekennzeichnet durch** folgende Schritte:
a) Ermitteln von zweiten Sensorrohdaten (16), die eine andere Betriebsgröße der Applikationsanlage (1) wiedergeben als die ersten Sensorrohdaten (16),
b) Extraktion von Features (15) aus den zweiten Sensorrohdaten (16), wobei die Features (15) gegenüber den zweiten Sensorrohdaten (16) eine reduzierte Datenmenge umfassen und als Datenbasis für einen Maschinelles-Lernen-Algorithmus dienen.

3. Überwachungsverfahren nach Anspruch 2, **gekennzeichnet durch** folgende Schritte zur Extraktion der Features (15) aus den ersten und den zweiten Sensorrohdaten (16):
a) Festlegung eines Betrachtungszeitfensters ([T_{A}, T_{E}]) zur Auswertung der ersten und zweiten Sensorrohdaten (16),
b) Festlegen mindestens eines Vergleichszeitraums ([t₁, t₂]) innerhalb des Betrachtungszeitfensters ([T_{A}, T_{E}]),
c) Unterteilung des Vergleichszeitraums ([t₁, t₂]) in mehrere aufeinander folgende Teilabschnitte (d_{DYN}, d_{STAT}, d_{REST}), und
d) Berechnung mindestens einer statistischen Kenngröße für die ersten und die zweiten Sensorrohdaten (16) innerhalb der einzelnen Teilabschnitte (d_{DYN}, d_{STAT}, d_{REST}), wobei die statistische Kenngröße ein Bestandteil der Features (15) ist.

4. Überwachungsverfahren nach Anspruch 3, **gekennzeichnet durch** folgende Schritte:
a) Ermitteln des Zeitpunkts von Änderungen des ersten Steuersignals innerhalb des Betrachtungszeitfensters ([T_{A}, T_{E}]), und
b) Festlegen des mindestens einen Vergleichszeitraums ([t₁, t₂]) zwischen zwei aufeinander folgenden Änderungen des ersten Steuersignals.

5. Überwachungsverfahren nach Anspruch 3, **gekennzeichnet durch** folgende Schritte:
a) Erfassen eines zweiten Steuersignals zur Ansteuerung der Applikationsanlage (1),
b) Ermitteln des Zeitpunkts von Änderungen des ersten Steuersignals innerhalb des Betrachtungszeitfensters,
c) Ermitteln des Zeitpunkts von Änderungen des zweiten Steuersignals innerhalb des Betrachtungszeitfensters,
d) Festlegen des mindestens einen Vergleichszeitraums zwischen einer Änderung des ersten Steuersignals und einer folgenden Änderung des zweiten Steuersignals.

6. Überwachungsverfahren nach einem der Ansprüche 3 bis 5, **dadurch gekennzeichnet, dass** der Vergleichszeitraum in mindestens einen der folgenden Teilabschnitte unterteilt wird:
a) keine, eine oder mehrere anfängliche Regulierphasen (d_{DYN}), in der die ersten Sensorrohdaten auf einen Steuersignalsprung reagieren,
b) keine, eine oder mehrere chronologisch anschließende regulierte Phasen (d_{STAT}), in der die ersten Sensorrohdaten mindestens teilweise auf einen Steuersignalsprung reagiert haben, und
c) eine chronologisch anschließende Restphase (d_{REST}), bis zum Ende des Vergleichszeitraums.

7. Überwachungsverfahren nach Anspruch 6, **gekennzeichnet durch** folgende Schritte:
a) Ermittlung einer Zeitkonstante der ersten Sensorrohdaten (16), und
b) Festlegung mindestens einer der folgenden Größen in Abhängigkeit von der Zeitkonstante der erste Sensorrohdaten (16):
b1) Anzahl der Regulierphasen (d_{DYN}) in dem Vergleichszeitraum,
b2) Zeitdauer der einzelnen Regulierphasen (d_{DYN}),
b3) Zeitdauer der einzelnen regulierten Phasen (d_{STAT}) -

8. Überwachungsverfahren nach Anspruch 6, **dadurch gekennzeichnet, dass** die Zeitdauer der einzelnen Regulierphasen (d_{DYN}) und/oder der einzelnen regulierten Phasen (d_{STAT}) zufällig festgelegt wird.

9. Überwachungsverfahren nach einem der Ansprüche 3 bis 8, **dadurch gekennzeichnet, dass** das Betrachtungszeitfenster ([T_{A}, T_{E}]) einer der folgenden Zeiträume ist:
a) ein bauteilbezogener Zeitraum, insbesondere
a1) Zeitraum einer Vorbereitung der Applikationsanlage für die Beschichtung eines Bauteils für die anschließende Beschichtung,
a2) Zeitraum einer Beschichtung des Bauteils, insbesondere ein Karossentakt, oder
b) ein applikationsanlagenbezogener Zeitraum, insbesondere
b1) Zeitdauer eines Einrichtbetriebs der Applikationsanlage (1),
b2) Zeitdauer eines Testbetriebs der Applikationsanlage (1),
b3) Zeitdauer eines Handbetriebs der Applikationsanlage (1),
b4) Zeitdauer eines Wartungsbetriebs der Applikationsanlage (1),
b5) Zeitdauer eines Produktionsbetriebs der Applikationsanlage (1),
b6) Zeitraum von nicht bauteilbezogenen automatisierten Nebenprozessen der Anlage (wie z.B. Spülen nach Zeit, automatische Tests, bzw. Diagnoseaktionen bei denen auch gezielt Anlagenkomponenten angesteuert werden,
c) ein zeitbezogener Zeitraum, insbesondere
c1) eine Stunde, ein Tag, eine Woche, ein Monat, ein Quartal, ein Jahr, oder
c2) eine Schichtlänge einer Arbeitsschicht.

10. Überwachungsverfahren nach einem der Ansprüche 3 bis 9, **dadurch gekennzeichnet, dass** die statistische Kenngröße eine der folgenden Kenngrößen ist:
a) eine univariate statistische Kenngröße, die nur die ersten Sensorrohdaten (16) berücksichtigt, insbesondere
a1) arithmetischer Mittelwert,
a2) geometrischer Mittelwert,
a3) Medianwert,
a4) Varianz,
a5) Maximalwert,
a6) Minimalwert,
b) eine multivariate statistische Kenngröße, die zusätzlich zu den ersten Sensorrohdaten (16) auch die zweiten Sensorrohdaten (16) und optional weitere Sensorrohdaten (16) berücksichtigt, insbesondere
b1) Pearson-Korrelationskoeffizient,
b2) Rangkorrelationskoeffizient.

11. Überwachungsverfahren nach einem der Ansprüche 3 bis 10, **dadurch gekennzeichnet, dass** die ersten Sensorrohdaten (16) und/oder die zweiten Sensorrohdaten (16) und oder weitere Sensorrohdaten (16) eine der folgenden Betriebsgrößen der Applikationsanlage (1) wiedergeben und/oder dass die ersten Steuersignale und/oder die zweiten Steuersignale eine der folgenden Betriebsgrößen der Applikationsanlage (1) steuern:
a) Drehzahl einer Turbine eines Rotationszerstäubers,
b) Luftdruck von Antriebsluft zum Antrieb einer Turbine eines Rotationszerstäubers,
c) Beschichtungsmitteldruck an einem Farbdruckregler,
d) Ladestrom einer elektrostatischen Beschichtungsmittelaufladung,
e) Ladespannung einer elektrostatischen Beschichtungsmittelaufladung,
f) Luftfeuchtigkeit in einer Beschichtungskabine,
g) Luftdruck von Lenkluft zur Formung eines Sprühstrahls des Beschichtungsmittels,
h) Mengenstrom von Lenkluft zur Formung eines Sprühstrahls des Beschichtungsmittels,
i) Lufttemperatur in einer Beschichtungskabine,
j) Position eines Farbauftreffpunkts eines Applikationsgeräts,
k) Bewegungsgeschwindigkeit eines Farbauftreffpunkts eines Applikationsgeräts,
l) Ventilstellung eines Ventiles, insbesondere eines Beschichtungsmittelventils, eines Spülmittelventils, eines Pulsluftventils oder eines Schmiermittelventils,
m) Antriebsgröße eines Antriebs, insbesondere eines Roboterantriebs, insbesondere Position, Geschwindigkeit, Beschleunigung, Strom, Spannung, Leistung, Temperatur,
n) Förderstrom einer Beschichtungsmittelpumpe oder eines Dosierers,
o) Position eines Linearförderers, der die zu beschichtenden Bauteile durch die Applikationsanlage (1) fördert,
p) Mengenstrom, Temperatur und Druck von Material,
q) Drehzahl eines Swirl-Applikators.

12. Überwachungsverfahren nach einem der vorhergehenden Ansprüche, **dadurch gekennzeichnet, dass** die ersten Sensorrohdaten (16) und/oder die zweiten Sensorrohdaten (16) eine Betriebsgröße einer der folgenden Komponenten der Applikationsanlage (1) wiedergeben:
a) Motor,
b) Robotergelenk eines Beschichtungsroboters,
c) Antriebsregler eines Roboterantriebs eines Beschichtungsroboters,
d) Turbine zum Antrieb eines Rotationszerstäubers,
e) Lenkluftregler zum Regeln eines Lenkluftstroms zur Formung eines Sprühstrahls eines Zerstäubers,
f) Pumpe, insbesondere Beschichtungsmittelpumpe,
g) Dosierer zum Dosieren des Beschichtungsmittels,
h) Ventil, insbesondere Proportionalventil,
i) Farbdruckregler,
j) Hochspannungserzeuger zur elektrostatischen Beschichtungsmittelaufladung,
k) Schalter,
l) Sensor,
m) Heizung,
n) Steuerung,
o) elektrische Sicherung,
p) elektrische Batterie,
q) unterbrechungsfreie Stromversorgung,
r) unterbrechungsfreie Signalübertragung,
s) Transformator,
t) Fluidleitungen, insbesondere Schläuche oder Rohre, für den Transport von Fluiden, insbesondere von Beschichtungsmittel, Dickstoff, Klebstoff, Verdünner, Luft oder Wasser,
u) Swirl-Applikator.

13. Überwachungsverfahren nach einem der vorhergehenden Ansprüche, **gekennzeichnet durch** folgenden Schritt zur Ermittlung der ersten Sensorrohdaten:
a) Messung der ersten Sensorrohdaten (16) durch einen ersten Sensor, oder
b) Auslesen der ersten Sensorrohdaten (16) aus einer Datenbank, wobei die ersten Sensorrohdaten (16) zuvor gemessen und in der Datenbank gespeichert werden.

14. Überwachungsverfahren nach einem der vorhergehenden Ansprüche,
**gekennzeichnet durch** folgenden Schritt:
Erstellung von Regeln zur späteren Auswertung der ersten Sensorrohdaten, wobei die Regeln durch folgende Schritte ermittelt werden:
a) Abruf von gespeicherten historischen Sensorrohdaten (13),
b) Ermittlung oder Abruf von gespeicherten Labels (14) in zeitlicher Zuordnung zu den historischen Sensorrohdaten (13), wobei die Labels (14) den Zustand der Applikationsanlage (1) bei der Messung der historischen Sensorrohdaten (13) wiedergeben,
c) Extraktion von Features (15) aus den historischen Sensorrohdaten (13), und
d) Ermittlung der Regeln mittels des Maschinelles-Lernen-Algorithmus' durch eine Auswertung der aus den historischen Sensorrohdaten (13) ermittelten Features (15) und der zugehörigen Labels (14).

15. Überwachungsverfahren nach einem der Ansprüche 1 bis 13,
**gekennzeichnet durch** folgenden Schritt:
Erstellung von Regeln zur späteren Auswertung der ersten Sensorrohdaten, wobei die Regeln durch folgende Schritte ermittelt werden:
a) Abruf von gespeicherten historischen Sensorrohdaten,
b) Extraktion von Features aus den historischen Sensorrohdaten,
c) Ermittlung der Regeln mittels eines unüberwachten Maschinelles-Lernen-Algorithmus' durch eine Auswertung der aus den historischen Sensorrohdaten ermittelten Features ohne zugehörige Labels.

16. Überwachungsverfahren nach einem der vorhergehenden Ansprüche, **gekennzeichnet durch** folgenden Schritt:
Auswertung der Features (15) der aktuell ermittelten ersten Sensorrohdaten (16) und/oder der zweiten Sensorrohdaten (16) mittels eines Maschinelles-Lernen-Algorithmus' zur Bestimmung des Betriebszustands der Applikationsanlage (1), insbesondere zur Erkennung eines Fehlerzustands der Applikationsanlage (1), insbesondere zur Erkennung eines der folgenden Betriebszustände der Applikationsanlage (1):
a) Verschleiß oder Defekt eines Farbdruckreglers,
b) Verschleiß oder Defekt eines Mischer, der mehrere Komponenten eines Beschichtungsmittels miteinander mischt,
c) Verschleiß oder Defekt einer Pumpe, insbesondere einer Beschichtungsmittelpumpe,
d) Verschleiß oder Defekt eines Ventils, insbesondere eines Ventils zur Steuerung von Lack, Dickstoff, Klebstoff, Verdünner, Luft oder Wasser,
e) Verschleiß oder Defekt einer Heizung,
f) Verschleiß oder Defekt eines Antriebsmotors,
g) elektrische Kontaktierungsfehler,
h) Erkennung von Lufteinschluss im Lack bzw. Aussetzer der Lackversorgung,
i) Eigenschaften eines Betriebsmediums der Applikationsanlage (1), insbesondere von Luft, Wasser, Lack, Klebstoff, Dickstoff,
j) Bewertung des Applikations- und Bewegungsprogramms auf Beanspruchung der Maschinenkomponenten bzw. Geräte,
k) Erkennung Abwurf eines Glockentellers,
l) Erkennung von Verschmutzung und/oder Feuchtigkeit an einem Zerstäuber,
m) Erkennung von Abweichungen im Betriebsverhalten von Motoren, Pumpen, Kolben, Lenklüfte, Turbinen, Hochspannung, Durchflussregler,
n) Allgemeine Erkennung von Anomalien im Sinne einer signifikanten Abweichung des Signalverlaufs zum Normalverlauf,
o) Prognose von Wartungsintervallen.

17. Applikationsanlage (1) zur Beschichtung von Bauteilen, nämlich Lackieranlage zur Lackierung von Kraftfahrzeugkarosseriebauteilen, mit
a) mindestens einem Applikator zur Applikation eines Beschichtungsmittels,
b) mindestens einem Manipulator zur Bewegung des Applikators, insbesondere als mehrachsiger Beschichtungsroboter,
c) mindestens einem Sensor zur Messung von ersten Sensorrohdaten, die eine Betriebsgröße der Applikationsanlage (1) wiedergeben, und
d) einer Steuereinrichtung (2-5), die die Applikationsanlage (1) steuert, wobei die Steuereinrichtung (2-5) in einem einzigen Bauteil angeordnet oder auf mehrere Bauteile verteilt angeordnet ist,
**dadurch gekennzeichnet,**
e) dass die Steuereinrichtung (2-5) das Überwachungsverfahren nach einem der vorhergehenden Ansprüche ausführt.

## Claims

1. Monitoring method for an application plant (1) for applying an application agent, namely for a painting plant for painting motor vehicle body components, having the following steps:
a) determination of first raw sensor data (16) representing an operating variable of the application plant (1), wherein the first raw sensor data (16) represent one of the following operating variables of the application plant (1):
a1) speed of a turbine of a rotary atomizer,
a2) air pressure of drive air for driving a turbine of a rotary atomizer,
a3) coating agent pressure at a paint pressure regulator,
a4) charging current of an electrostatic coating agent charging system,
a5) charging voltage of an electrostatic coating agent charging system,
a6) humidity in a coating booth,
a7) air pressure of shaping air to form a spray of coating agent,
a8) mass flow rate of shaping air for forming a spray of the coating agent,
a9) air temperature in a coating booth,
a10) position of a paint impact point of an application device,
a11) movement speed of a paint impact point of an application device,
a12) flow rate of a coating agent pump or a dosing unit,
b) acquisition of first control signals for controlling the application plant (1),
comprising the following steps:
c) extracting features (15) from the first raw sensor data (16), the features (15) comprising a reduced amount of data compared to the first raw sensor data (16) and serving as a data basis for a machine learning algorithm, wherein the extraction of the features comprises the following steps:
c1) defining an observation period window ([T_{A}, T_{E}]) for evaluating the first raw sensor data (16),
c2) defining at least one comparison period ([t1, t2]) within the observation period window ([T_{A}, T_{E}]),
c3) subdividing the comparison period ([t1, t2]) into several successive subsections (d_{DYN}, d_{STAT}, d_{REST}), and
c4) calculating at least one statistical parameter for the first raw sensor data (16) and/or further raw sensor data within the individual subsections (d_{DYN}, d_{STAT}, d_{REST}), the statistical parameter being a component of the features (15).

2. Monitoring method according to claim 1, **characterized by** the following steps:
a) determining second raw sensor data (16) reflecting a different operating variable of the application plant (1) than the first raw sensor data (16),
b) extracting features (15) from the second raw sensor data (16), the features (15) comprising a reduced data quantity compared to the second raw sensor data (16) and serving as a data basis for a machine learning algorithm.

3. Monitoring method according to claim 2, **characterized by** the following steps for extracting the features (15):
a) defining an observation period window ([T_{A}, T_{E}]) for evaluating the first and second raw sensor data (16),
b) defining at least one comparison period ([t1, t2]) within the observation period window ([T_{A}, T_{E}]),
c) subdividing the comparison period ([t1, t2]) into several successive subsections (d_{DYN}, d_{STAT}, d_{REST}), and
d) calculating at least one statistical parameter for the first and the second raw sensor data (16) within the individual subsections (d_{DYN}, d_{STAT}, d_{REST}), the statistical parameter being a component of the features (15).

4. Monitoring method according to claim 3, **characterized by** the following steps:
a) determining the timing of changes of the first control signal within the observation time window ([T_{A}, T_{E}]), and
b) determining the at least one comparison period ([t1, t2]) between two successive changes of the first control signal.

5. Monitoring method according to claim 3, **characterized by** the following steps:
a) detecting a second control signal for controlling the application plant (1),
b) determining the time of changes of the first control signal within the observation time window,
c) determining the time of changes of the second control signal within the observation time window,
d) determining the at least one comparison period between a change of the first control signal and a subsequent change of the second control signal.

6. Monitoring method according to any one of claims 3 to 5, **characterized in that** the comparison period is divided into at least one of the following subsections:
a) none, one or more initial regulating phases (d_{DYN}) in which the first raw sensor data responds to a control signal step,
b) none, one or more chronologically subsequent regulated phases (d_{STAT}) in which the first raw sensor data have at least partially responded to a control signal step, and
c) a chronologically subsequent residual phase (d_{REST}), until the end of the comparison period.

7. Monitoring method according to claim 6, **characterized by** the following steps:
a) determining a time constant of the first raw sensor data (16), and
b) determining at least one of the following quantities as a function of the time constant of the first raw sensor data (16):
b1) Number of regulating phases (d_{DYN}) in the comparison period,
b2) time duration of the individual regulating phases (d_{DYN}),
b3) time duration of the individual regulated phases (d_{STAT}).

8. Monitoring method according to claim 6, **characterized in that** the time duration of the individual regulating phases (d_{DYN}) and/or the individual regulated phases (d_{STAT}) is determined randomly.

9. Monitoring method according to any of claims 3 to 8, **characterized in that** the observation time window ([T_{A}, T_{E}]) is one of the following time periods:
a) a component-related time period, in particular.
a1) period of a preparation of the application plant for the coating of a component for the subsequent coating,
a2) period of a coating of the component, in particular a body cycle, or
b) a period of time related to the application plant, in particular
b1) duration of a set-up operation of the application plant (1),
b2) duration of a test operation of the application plant (1),
b3) duration of a manual operation of the application plant (1),
b4) duration of a maintenance operation of the application plant (1),
b5) duration of a production operation of the application plant (1),
b6) period of time of non component-related automated secondary processes of the plant (such as e.g. rinsing according to time, automatic tests, or diagnostic actions in which system components are also specifically controlled
c) a time-related period, in particular
c1) an hour, a day, a week, a month, a quarter, a year, or
c2) a shift length of a work shift.

10. Monitoring method according to any one of claims 3 to 9, **characterized in that** the statistical parameter is one of the following parameters:
a) a univariate statistical parameter which takes into account only the first raw sensor data (16), in particular
a1) arithmetic mean value,
a2) geometric mean value,
a3) median value,
a4) variance,
a5) maximum value,
a6) minimum value,
b) a multivariate statistical parameter which, in addition to the first raw sensor data (16), also takes into account the second raw sensor data (16) and optionally further raw sensor data (16), in particular
b1) Pearson correlation coefficient,
b2) rank correlation coefficient.

11. Monitoring method according to one of claims 3 to 10, **characterized in that** the first raw sensor data (16) and/or the second raw sensor data (16) and/or further raw sensor data (16) reproduce one of the following operating variables of the application plant (1) and/or **in that** the first control signals and/or the second control signals control one of the following operating variables of the application plant (1):
a) speed of a turbine of a rotary atomizer,
b) air pressure of drive air for driving a turbine of a rotary atomizer,
c) coating agent pressure at a paint pressure regulator,
d) charging current of an electrostatic coating agent charging system,
e) charging voltage of an electrostatic coating agent charging system,
f) humidity in a coating booth,
g) air pressure of shaping air to form a spray of coating agent,
h) mass flow rate of shaping air for forming a spray of the coating agent,
i) air temperature in a coating booth,
j) position of a paint impact point of an application device,
k) movement speed of a paint impact point of an application device,
l) valve position of a valve, in particular a coating agent valve, a flushing agent valve, a pulse air valve or a lubricant valve,
m) drive variable of a drive, in particular of a robot drive, in particular position, speed, acceleration, current, voltage, power, temperature,
n) flow rate of a coating agent pump or a dosing unit,
o) position of a linear conveyor which conveys the components to be coated through the applicator (1),
p) flow rate, temperature and pressure of material,
q) rotational speed of a swirl applicator.

12. Monitoring method according to one of the preceding claims, **characterized in that** the first raw sensor data (16) and/or the second raw sensor data (16) reflect an operating variable of one of the following components of the application plant (1):
a) Motor,
b) robot joint of a coating robot,
c) drive controller of a robot drive of a coating robot,
d) turbine for driving a rotary atomizer,
e) shaping air controller for controlling a flow of shaping air to form a spray of an atomizer,
f) pump, in particular coating agent pump,
g) metering device for metering the coating agent,
h) valve, in particular proportional valve,
i) paint pressure regulator,
j) high-voltage generator for electrostatic coating agent charging,
k) switch,
l) sensor,
m) heater,
n) control system,
o) electrical fuse,
p) electric battery,
q) uninterruptible power supply,
r) uninterruptible signal transmission,
s) transformer,
t) fluid lines, in particular hoses or pipes, for the transport of fluids, in particular coating agent, thickener, adhesive, thinner, air or water,
u) swirl applicator.

13. Monitoring method according to any of the preceding claims, **characterized by** the following step for determining the first raw sensor data:
a) measuring the first raw sensor data (16) by a first sensor, or
b) reading the first raw sensor data (16) from a database, wherein the first raw sensor data (16) are previously measured and stored in the database.

14. Monitoring method according to any one of the preceding claims,
**characterized by** the following step:
Establishing rules for subsequent evaluation of the first raw sensor data, wherein the rules are obtained by the following steps:
a) retrieving stored historical raw sensor data (13),
b) determining or retrieving stored labels (14) in temporal association with the historical raw sensor data (13), the labels (14) reflecting the state of the application plant (1) when the historical raw sensor data (13) were measured,
c) extracting features (15) from the historical raw sensor data (13), and
d) determining the rules by means of the machine learning algorithm by evaluating the features (15) determined from the historical raw sensor data (13) and the associated labels (14).

15. Monitoring method according to any one of claims 1 to 13,
**characterized by** the following step:
Establishing rules for subsequent evaluation of the initial raw sensor data, wherein the rules are determined by the following steps:
a) retrieval of stored historical raw sensor data,
b) extracting features from the historical raw sensor data,
c) determining the rules by means of an unsupervised machine learning algorithm by an evaluation of the features determined from the historical raw sensor data without associated labels.

16. Monitoring method according to any of the preceding claims, **characterized by** the following step:
Evaluation of the features (15) of the currently determined first raw sensor data (16) and/or the second raw sensor data (16) by means of a machine learning algorithm' for determining the operating state of the application plant (1), in particular for detecting a fault state of the application plant (1), in particular for detecting one of the following operating states of the application plant (1):
a) Wear or defect of a paint pressure regulator,
b) wear or defect of a mixer which mixes several components of a coating agent with each other,
c) wear or defect of a pump, in particular a coating agent pump,
d) wear or defect of a valve, in particular a valve for controlling coating, thick matter, adhesive, thinner, air or water,
e) wear or defect of a heater,
f) wear or defect of a drive motor,
g) electrical contact faults,
h) detection of air entrapment in the paint or interruption of the paint supply,
i) properties of an operating medium of the application plant (1), in particular of air, water, lacquer, adhesive, thick matter,
j) evaluation of the application and movement program for stress on the machine components or equipment,
k) detection of ejection of a bell plate,
l) detection of contamination and/or moisture on an atomizer,
m) Detection of anomalies in the operating behavior of motors, pumps, pistons, steering gaps, turbines, high voltage, flow regulators,
n) general detection of anomalies in the sense of a significant deviation of the signal curve from the normal curve,
o) Prediction of maintenance intervals.

17. Application plant (1) for coating components, namely painting plant for painting motor vehicle body components, having
a) at least one applicator for applying a coating agent,
b) at least one manipulator for moving the applicator, in particular as a multi-axis coating robot,
c) at least one sensor for measuring first raw sensor data which represent an operating variable of the application plant (1), and
d) a control device (2-5) which controls the applicator (1), the control device (2-5) being arranged in a single component or distributed over a plurality of components,
**characterized in**
e) that the control device (2-5) carries out the monitoring method according to one of the preceding claims.

## Revendications

1. Procédé de surveillance pour une installation d'application (1) destinée à l'application d'un agent d'application, à savoir pour une installation de peinture destinée à la peinture d'éléments de carrosserie de véhicule automobile, comprenant les étapes suivantes :
a) Détermination de premières données brutes de capteur (16) représentant une grandeur de fonctionnement de l'installation d'application (1), les premières données brutes de capteur (16) représentant l'une des grandeurs de fonctionnement suivantes de l'installation d'application (1) :
a1) Vitesse de rotation d'une turbine d'un pulvérisateur rotatif,
a2) Pression d'air d'entraînement pour l'entraînement d'une turbine d'un pulvérisateur rotatif,
a3) Pression de l'agent de revêtement à un régulateur de pression de peinture,
a4) Courant de charge d'une charge électrostatique de l'agent de revêtement,
a5) Tension de charge d'une charge électrostatique de l'agent de revêtement,
a6) Humidité de l'air dans une cabine de revêtement,
a7) Pression d'air de guidage pour la formation d'un jet de pulvérisation de l'agent de revêtement,
a8) Débit volumique d'air de guidage pour la formation d'un jet de pulvérisation de l'agent de revêtement,
a9) Température de l'air dans une cabine de revêtement,
a10) Position d'un point d'impact de la peinture d'un dispositif d'application,
a11) Vitesse de déplacement d'un point d'impact de la peinture d'un dispositif d'application,
a12) Débit d'alimentation d'une pompe d'agent de revêtement ou d'un doseur, et
b) Acquisition de premiers signaux de commande pour la commande de l'installation d'application (1), comprenant les étapes suivantes :
c) Extraction de caractéristiques (15) à partir des premières données brutes de capteur (16), les caractéristiques (15) comprenant une quantité de données réduite par rapport aux premières données brutes de capteur (16) et servant de base de données pour un algorithme d'apprentissage automatique, l'extraction des caractéristiques comprenant les étapes suivantes :
c1) Définition d'une fenêtre temporelle d'observation ([T_{A}, T_{E}]) pour l'évaluation des premières données brutes de capteur (16), 30
c2) Définition d'au moins une période de comparaison ([t1, t2]) à l'intérieur de la fenêtre temporelle d'observation ([T_{A}, T_{E}]),
c3) Subdivision de la période de comparaison ([t1, t2]) en plusieurs sous-segments successifs (d__{DYN}, d__{STAT}, d__{REST}), et
c4) Calcul d'au moins un paramètre statistique pour les premières données brutes de capteur (16) et/ou d'autres données brutes de capteur à l'intérieur des différents sous-segments (d__{DYN}, d__{STAT}, d__{REST}), le paramètre statistique étant un élément des caractéristiques (15).

2. Procedé de surveillance selon la revendication 1, **caractérisé par** les étapes suivantes :
a) Détermination de deuxièmes données brutes de capteur (16) représentant une autre grandeur de fonctionnement de l'installation d'application (1) que les premières données brutes de capteur (16),
b) Extraction de caractéristiques (15) à partir des deuxièmes données brutes de capteur (16), les caractéristiques (15) comprenant une quantité de données réduite par rapport aux deuxièmes données brutes de capteur (16) et servant de base de données pour un algorithme d'apprentissage automatique.

3. Procedé de surveillance selon la revendication 2, **caractérisé par** les étapes suivantes pour l'extraction des caractéristiques (15) à partir des premières et des deuxièmes données brutes de capteur (16) :
a) Définition d'une fenêtre temporelle d'observation ([T_{A}, T_{E}]) pour l'évaluation des premières et deuxièmes données brutes de capteur (16),
b) Définition d'au moins une période de comparaison ([t₁ , t₂ ]) à l'intérieur de la fenêtre temporelle d'observation ([T_{A}, T_{E}]),
c) Subdivision de la période de comparaison ([t₁ , t₂ ]) en plusieurs sous-segments successifs (d__{DYN}, d__{STAT}, d__{REST}), et
d) Calcul d'au moins un paramètre statistique pour les premières et les deuxièmes données brutes de capteur (16) à l'intérieur des différents sous-segments (d__{DYN}, d__{STAT}, d__{REST}), le paramètre statistique étant un élément des caractéristiques (15).

4. Procedé de surveillance selon la revendication 3, **caractérisé par** les étapes suivantes :
a) Détermination du moment des changements du premier signal de commande à l'intérieur de la fenêtre temporelle d'observation ([T_{A}, T_{E}]), et
b) Définition d'au moins une période de comparaison ([t₁ , t₂ ]) entre deux changements successifs du premier signal de commande.

5. Procedé de surveillance selon la revendication 3, **caractérisé par** les étapes suivantes :
a) Acquisition d'un deuxième signal de commande pour la commande de l'installation d'application (1),
b) Détermination du moment des changements du premier signal de commande à l'intérieur de la fenêtre temporelle d'observation,
c) Détermination du moment des changements du deuxième signal de commande à l'intérieur de la fenêtre temporelle d'observation,
d) Définition d'au moins une période de comparaison entre un changement du premier signal de commande et un changement suivant du deuxième signal de commande.

6. Procédé de surveillance selon l'une des revendications 3 à 5, **caractérisé en ce que** la période de comparaison est subdivisée en au moins un des sous-segments suivants :
a) aucune, une ou plusieurs phases de régulation initiales (d__{DYN}), dans laquelle les premières données brutes de capteur réagissent à un saut du signal de commande,
b) aucune, une ou plusieurs phases régulées chronologiquement suivantes (d__{STAT}), dans laquelle les premières données brutes de capteur ont réagi au moins partiellement à un saut du signal de commande, et
c) une phase résiduelle chronologiquement suivante (d__{REST}), jusqu'à la fin de la période de comparaison.

7. Procédé de surveillance selon la revendication 6, **caractérisé par** les étapes suivantes :
a) Détermination d'une constante de temps des premières données brutes de capteur (16), et
b) Définition d'au moins une des grandeurs suivantes en fonction de la constante de temps des premières données brutes de capteur (16) :
b1) Nombre de phases de régulation (d__{DYN}) dans la période de comparaison,
b2) Durée des différentes phases de régulation (d__{DYN}),
b3) Durée des différentes phases régulées (d__{STAT}).

8. Procédé de surveillance selon la revendication 6, **caractérisé en ce que** la durée des différentes phases de régulation (d__{DYN}) et/ou des différentes phases régulées (d__{STAT}) est fixée de manière aléatoire.

9. Procédé de surveillance selon l'une des revendications 3 à 8, **caractérisé en ce que** la fenêtre temporelle d'observation ([TA, TE]) est l'une des périodes suivantes :
a) une période relative à une pièce, en particulier
a1) période de préparation de l'installation d'application pour le revêtement d'une pièce pour le revêtement ultérieur,
a2) période de revêtement de la pièce, en particulier un cycle de carrosserie, ou
b) une période relative à l'installation d'application, en particulier
b1) Durée d'un mode de configuration de l'installation d'application (1),
b2) Durée d'un mode de test de l'installation d'application (1),
b3) Durée d'un mode manuel de l'installation d'application (1),
b4) Durée d'un mode de maintenance de l'installation d'application (1),
b5) Durée d'un mode de production de l'installation d'application (1),
b6) Période de processus annexe automatisé non lié à la pièce de l'installation (tel que rinçage selon le temps, tests automatiques, ou actions de diagnostic dans lesquelles des composants de l'installation sont également commandés de manière ciblée,
c) une période liée au temps, en particulier
c1) une heure, un jour, une semaine, un mois, un trimestre, une année, ou
c2) une durée de poste d'une équipe de travail.

10. Procédé de surveillance selon l'une des revendications 3 à 9, **caractérisé en ce que** le paramètre statistique est l'un des paramètres suivants :
a) un paramètre statistique univarié, qui ne prend en compte que les premières données brutes de capteur (16), en particulier
a1) moyenne arithmétique,
a2) moyenne géométrique,
a3) médiane,
a4) variance,
a5) valeur maximale,
a6) valeur minimale,
b) un paramètre statistique multivarié, qui prend en compte, en plus des premières données brutes de capteur (16), également les deuxièmes données brutes de capteur (16) et éventuellement d'autres données brutes de capteur (16), en particulier
b1) coefficient de corrélation de Pearson,
b2) coefficient de corrélation de rang.

11. Procédé de surveillance selon l'une des revendications 3 à 10, **caractérisé en ce que** les premières données brutes de capteur (16) et/ou les deuxièmes données brutes de capteur (16) et/ou d'autres données brutes de capteur (16) représentent l'une des grandeurs de fonctionnement suivantes de l'installation d'application (1) et/ou **en ce que** les premiers signaux de commande et/ou les deuxièmes signaux de commande commandent l'une des grandeurs de fonctionnement suivantes de l'installation d'application (1) :
a) Vitesse de rotation d'une turbine d'un pulvérisateur rotatif,
b) Pression d'air d'entraînement pour l'entraînement d'une turbine d'un pulvérisateur rotatif,
c) Pression de l'agent de revêtement à un régulateur de pression de peinture,
d) Courant de charge d'une charge électrostatique de l'agent de revêtement,
e) Tension de charge d'une charge électrostatique de l'agent de revêtement,
f) Humidité de l'air dans une cabine de revêtement,
g) Pression d'air de guidage pour la formation d'un jet de pulvérisation de l'agent de revêtement,
h) Débit volumique d'air de guidage pour la formation d'un jet de pulvérisation de l'agent de revêtement,
i) Température de l'air dans une cabine de revêtement,
j) Position d'un point d'impact de la peinture d'un dispositif d'application,
k) Vitesse de déplacement d'un point d'impact de la peinture d'un dispositif d'application,
l) Position de la vanne d'une vanne, en particulier d'une vanne d'agent de revêtement, d'une vanne de liquide de rinçage, d'une vanne d'air pulsé ou d'une vanne de lubrifiant,
m) Grandeur d'entraînement d'un entraînement, en particulier d'un entraînement de robot, en particulier position, 15 vitesse, accélération, courant, tension, puissance, température,
n) Débit d'alimentation d'une pompe d'agent de revêtement ou d'un doseur,
o) Position d'un convoyeur linéaire qui transporte les pièces à revêtir à travers l'installation d'application (1),
p) Débit volumique, température et pression de matériau,
q) Vitesse de rotation d'un applicateur à effet tourbillonnaire.

12. Procédé de surveillance selon l'une des revendications précédentes, **caractérisé en ce que** les premières données brutes de capteur (16) et/ou les deuxièmes données brutes de capteur (16) représentent une grandeur de fonctionnement de l'un des composants suivants de l'installation d'application (1) :
a) Moteur,
b) Articulation de robot d'un robot de revêtement,
c) Régulateur d'entraînement d'un entraînement de robot d'un robot de revêtement,
d) Turbine pour l'entraînement d'un pulvérisateur rotatif,
e) Régulateur d'air de guidage pour la régulation d'un débit d'air de guidage pour la formation d'un jet de pulvérisation d'un pulvérisateur,
f) Pompe, en particulier pompe d'agent de revêtement,
g) Doseur pour le dosage de l'agent de revêtement,
h) Vanne, en particulier vanne proportionnelle,
i) Régulateur de pression de peinture,
j) Générateur de haute tension pour la charge électrostatique de l'agent de revêtement,
k) Interrupteur,
l) Capteur,
m) Chauffage,
n) Commande,
o) Fusible électrique,
p) Batterie électrique,
q) Alimentation sans interruption,
r) Transmission de signal sans interruption,
s) Transformateur,
t) Conduites de fluide, en particulier flexibles ou tuyaux, pour le transport de fluides, en particulier d'agent de revêtement, de produit épais, d'adhésif, de diluant, d'air ou d'eau,
u) Applicateur à effet tourbillonnaire.

13. Procédé de surveillance selon l'une des revendications précédentes, **caractérisé par** l'étape suivante pour la détermination des premières données brutes de capteur :
a) Mesure des premières données brutes de capteur (16) par un premier capteur, ou
b) Lecture des premières données brutes de capteur (16) à partir d'une base de données, les premières données brutes de capteur (16) ayant été préalablement mesurées et enregistrées dans la base de données.

14. Procédé de surveillance selon l'une des revendications précédentes, **caractérisé par** l'étape suivante : Création de règles pour l'évaluation ultérieure des premières données brutes de capteur, les règles étant déterminées par les étapes suivantes :
a) Récupération de données brutes de capteur historiques enregistrées (13),
b) Détermination ou récupération d'étiquettes (14) enregistrées en association temporelle avec les données brutes de capteur historiques (13), les étiquettes (14) représentant l'état de l'installation d'application (1) lors de la mesure des données brutes de capteur historiques (13),
c) Extraction de caractéristiques (15) à partir des données brutes de capteur historiques (13), et
d) Détermination des règles au moyen de l'algorithme d'apprentissage automatique par une évaluation des caractéristiques (15) déterminées à partir des données brutes de capteur historiques (13) et des étiquettes (14) associées.

15. Procédé de surveillance selon l'une des revendications 1 à 13, **caractérisé par** l'étape suivante :
Création de règles pour l'évaluation ultérieure des premières données brutes de capteur, les règles étant déterminées par 5 les étapes suivantes :
a) Récupération de données brutes de capteur historiques enregistrées,
b) Extraction de caractéristiques à partir des données brutes de capteur historiques,
c) Détermination des règles au moyen d'un algorithme d'apprentissage automatique non supervisé par une évaluation des caractéristiques déterminées à partir des données brutes de capteur historiques sans étiquettes associées.

16. Procédé de surveillance selon l'une des revendications précédentes, **caractérisé par** l'étape suivante :
Évaluation des caractéristiques (15) des premières données brutes de capteur (16) déterminées actuellement et/ou des 25 deuxièmes données brutes de capteur (16) au moyen d'un algorithme d'apprentissage automatique pour la détermination de l' état de fonctionnement de l'installation d'application (1), en particulier pour la détection d'un état de défaut de l' installation d'application (1), en particulier pour la détection de l'un des états de fonctionnement suivants de l' installation d'application (1) :
a) Usure ou défaillance d'un régulateur de pression de peinture,
b) Usure ou défaillance d'un mélangeur, qui mélange plusieurs composants d'un agent de revêtement,
c) Usure ou défaillance d'une pompe, en particulier d'une pompe d'agent de revêtement,
d) Usure ou défaillance d'une vanne, en particulier d'une vanne pour la commande de peinture, de produit épais, d'adhésif, de diluant, d'air ou d'eau,
e) Usure ou défaillance d'un chauffage,
f) Usure ou défaillance d'un moteur d'entraînement,
g) Défaut de contact électrique,
h) Détection d'inclusion d'air dans la peinture ou d'interruption de l'alimentation en peinture,
i) Propriétés d'un fluide de fonctionnement de l'installation d'application (1), en particulier de l'air, de l'eau, de la peinture, de l'adhésif, du produit épais,
j) Évaluation du programme d'application et de déplacement concernant la sollicitation des composants de machine ou des appareils,
k) Détection de largage d'une cloche de pulvérisation,
l) Détection de contamination et/ou d'humidité sur un pulvérisateur,
m) Détection d'écarts dans le comportement de fonctionnement de moteurs, pompes, pistons, airs de guidage, turbines, haute tension, régulateurs de débit,
n) Détection générale d'anomalies au sens d'un écart significatif de l'évolution du signal par rapport à l'évolution normale,
o) Prévision d'intervalles de maintenance.

17. Installation d'application (1) pour le revêtement de pièces, à savoir installation de peinture pour la peinture d'éléments de carrosserie de véhicule automobile, comprenant
a) au moins un applicateur pour l'application d'un agent de revêtement,
b) au moins un manipulateur pour le déplacement de l'applicateur, en particulier sous la forme d'un robot de revêtement multiaxe,
c) au moins un capteur pour la mesure de premières données brutes de capteur représentant une grandeur de fonctionnement de l'installation d'application (1), et
d) un dispositif de commande (2-5), qui commande l'installation d'application (1), le dispositif de commande (2-5) étant agencé dans une seule pièce ou réparti sur plusieurs pièces,
**caractérisé en ce que**,
e) le dispositif de commande (2-5) exécute le procédé de surveillance selon l'une des revendications précédentes.
